# EUROPEAN PATENT SPECIFICATION

(11) **EP 0 512 358 B1**
(45) Date of publication and mention of the grant of the patent: **06.03.1996**
(21) Application number: 92107181.7
(22) Date of filing: 28.04.1992
(51) Int. Cl.: B60G 21/055

(54) **A system for controlling the load on an antiroll stabiliser bar associated with an independent suspension system for a motor vehicle**
System zur Regelung des Drehmomentes eines Drehstabrollstabilisators in einer unabhängigen Kraftfahrzeugaufhängung
Système de réglage de la charge d'une barre stabilisatrice dans une suspension indépendante de véhicule automobile

(30) Priority: 06.05.1991 IT TO910337
(43) Date of publication of application: 11.11.1992
(73) Proprietor: FIAT AUTO S.p.A., I-10135 Torino (IT)
(72) Inventor: Giavarini, Fabio, I-10126 Torino (IT); Torrielli, Vittorino, I-10127 Torino (IT)
(74) Representative: Saconney, Piero

(56) References cited:
- EP-A- 0 234 808
- EP-A- 0 354 113
- EP-A- 0 371 709
- EP-A- 0 439 979
- WO-A-90/11217
- DE-A- 3 705 520
- GB-A- 2 235 168
- NL-A- 8 702 468
- US-A- 4 828 283

## Description

The present invention relates to a system for controlling the load on a pair of antiroll stabiliser bars respectively associated with a front and a rear suspension units of the independent type for a motor vehicle, of the type indicated in the pre-characterising portion of annexed claim 1.

NL-A-8702468 discloses a system for controlling the load on an antiroll stabiliser bar associated with an independent suspension system for a motor vehicle, as described in the pre-characterising portion of claim 1.

A system of the aforesaid type for controlling the load on a stabiliser bar is also known, for example, from the document DE-A-3705520 which describes a regulator for adjusting the forces bearing on the wheels of a motor vehicle. In this solution, at least one axle of the motor vehicle is associated with a torsion-bar stabiliser whose two ends are connected to respective wheel supports with the interposition of a cylinder-piston-unit. Each cylinder-piston unit rotates the torsion bar in dependence on signals generated by sensors which detect parameters connected with the motion of the motor vehicle so as to vary the forces bearing on the wheels and distribute the loads between the front bar and the rear bar, thus counteracting rear-wheel-drive oversteer on bends.

The object of the present invention is to provide a simpler and less expensive system which can achieve the advantages of the aforementioned known systems in order to improve the comfort of the passengers when the motor vehicle is cornering.

This object is achieved by virtue of the features set forth in the characterising portion of claim 1.

By virtue of this solution, when the motor vehicle is cornering, it assumes a predetermined roll attitude which is variable continuously in dependence on travelling conditions, thus improving the comfort of the passengers. Moreover, the control of the roll attitude affects the yaw velocity on bends so that the motor vehicle travels more safely.

According to a further characteristic of the invention, a single, double-acting actuator can be used, interposed between one of the end arms of a stabiliser bar and the respective suspension element.

A further advantage resulting from this characteristic is that the use of simple components keeps the manufacturing costs of the system quite low and improves its reliability.

Further characteristics and advantages of the invention will become clear from the detailed description which follows with reference to the appended drawings, provided purely by way of non-limiting example, in which:

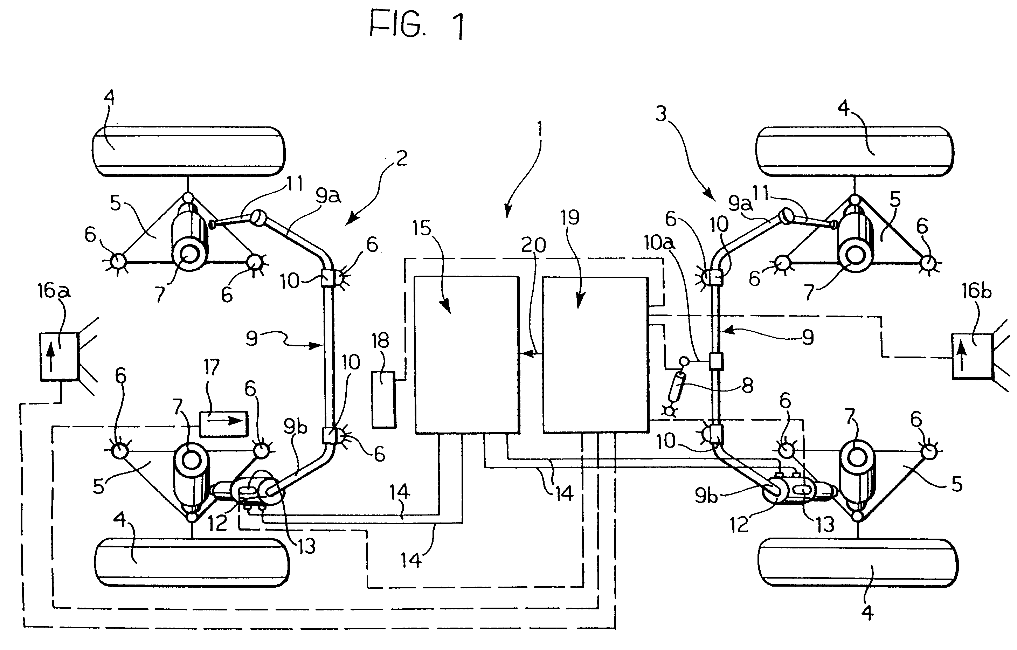

Figure 1 is a schematic view of the system according to the invention,
Figure 2 and 3 are functional diagrams schematically showing alternative embodiments of hydraulic circuits of the system shown in Figure 1.

With reference to the drawings, a system for controlling the load on an antiroll stabiliser bar associated with an independent suspension system for a motor vehicle is generally indicated 1.

The wheels 4 of the motor vehicle are articulated to the body 6 by respective arms 5. Each arm 5 is also associated with a respective shock-absorber 7. A simple sensor 8 allows to define the attitude of the rear suspension 3. Respective, substantially U-shaped, antiroll stabiliser bars 9 associated with the front suspension 2 and the rear suspension 3 are articulated to the body 6 by pairs of joints 10.

A first end 9a of the bar 9 is connected to the respective arm 5 by means of an inextensible connecting member 11 and its opposite end 9b is connected to the respective arm 5 with the interposition of a fluid actuator cylinder 12 associated with a respective pressure sensor 13, whose operation will be explained below.

Each actuator cylinder 12 is connected by pipes 14 to a hydraulic control unit 15 which controls its operation.

Associated with the body 6 of the motor vehicle are two sensors 16a and 16b near its front and rear ends for sensing its transverse acceleration, a sensor 17 for sensing the longitudinal velocity of the motor vehicle, and a sensor 18 for sensing the steering angle. The sensors 16a and 16b may be constituted by two accelerometers or by an accelerometer and a turn meter.

The parameters detected by the sensors 8, 13, 16a, 16b, 17 and 18 are transmitted to an electronic control unit 19 which processes this input data and, in dependence thereon, transmits commands to control the operation of the hydraulic control unit 15. The transmission of commands between the electronic control unit 19 and the hydraulic control unit 15 is generally indicated by the arrow 20.

The signals sent by the attitude sensor 8 are used to calculate the magnitude of the load bearing on the rear suspension and hence the roll centre of the body. Since the loads bearing on the suspensions and the geometry of the suspensions are known, the electronic control unit 19 integrates this information with the signals received from the other sensors of the system to control the roll attitude of the motor-vehicle body.

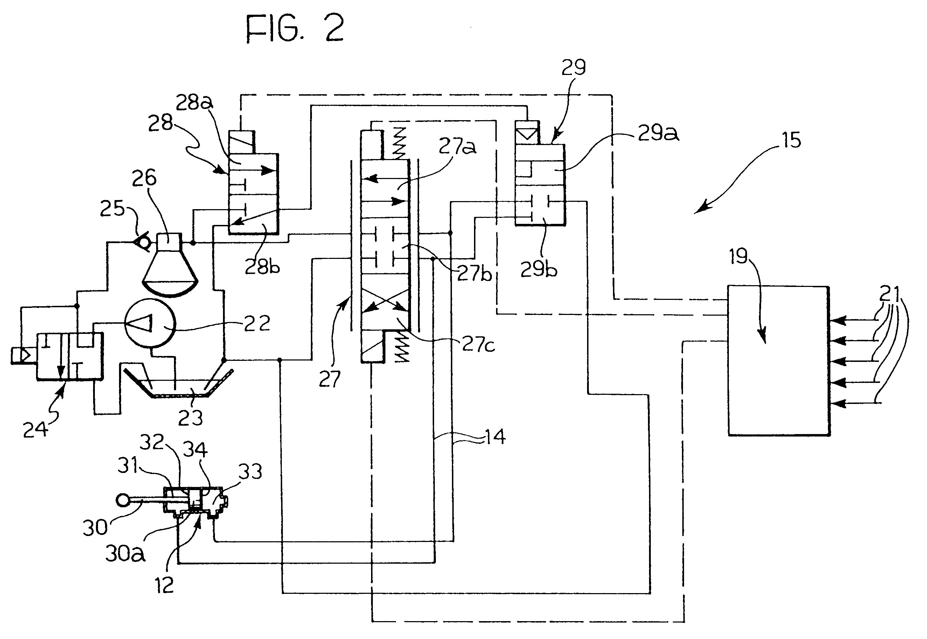

For reasons of clarity of the drawings, Figure 2 shows schematically the elements constituting a hydraulic control unit 15 for an embodiment for controlling each stabiliser bar 9. As stated above, signals 21 reach the electronic control unit 19 which processes them in order to coordinate the operation of a series of solenoid valves which bring about the desired behaviour of the actuator cylinders 12 so as continuously to ensure the correct distribution of the loads on the bars 9.

The hydraulic circuit 15 includes principally a source of hydraulic energy, constituted by a pump 22, and a respective discharge reservoir 23. The pump 22 may be constituted by a two-stage pump, of which a first stage supplies hydraulic energy to the circuit 15 and the second stage (not shown in the drawings) is used for the servo-assistance of the steering.

Naturally, if the circuit 15 is arranged to distribute the working loads simultaneously on the bars 9 of the front and rear suspensions 2 and 3, the pump 22 and the discharge reservoir 23 are common to two similar interconnected hydraulic circuits.

Downstream of the pump 22 is a hydraulically-operated recirculating valve 24 which maintains the desired hydraulic pressure in the circuit; this is connected in series with a non-return valve 25, a hydropneumatic accumulator 26 and a four-way, three-position, proportional solenoid valve 27 operated by a double electromagnet with spring centering. The circuit also includes a three-way, two-position solenoid valve 28 and a three-way, two-position hydraulic servovalve 29 controlled by the valve 28. The valves 28 and 29 are used to connect the bar to the respective suspension unit or disconnect it therefrom. If the working sections of the double-acting piston 12 are equal, the valves 28 and 29 may be replaced by a by-pass valve which enables communication between the various chambers of the actuator cylinder 12.

The actuator cylinder 12 includes a rod 30, one end of which is articulated to a suspension arm 5 and the opposite end of which is connected to a piston 30a defining two opposed working chambers 31 and 33 with respective end surfaces 32 and 34 in the cylinder 12.

The pressure sensor 13 detects the pressure difference between the working chambers 31 and 33 and sends this signal to the central control unit 19 to regulate the force produced by the actuator 12.

In operation, when the valves 27 and 29 are in the configuration shown in Figure 2, which corresponds to the positions 27b and 29b of the respective valves, the actuator 12 constitutes a rigid unit since the two chambers 31 and 33 are closed at the ends of the pipes 14. If the servovalve 27 moves to the position 27a whilst the valve 29 remains in the position 29b, the chamber 33 receives pressurised fluid and the piston 30a moves towards the chamber 31, causing the actuator 12 to extend; if the valve moves to the position 27c, the piston 30a moves towards the chamber 33, causing the actuator 12 to contract.

If the valve 28 is moved from the position 28b of the drawing to the position 28a, the servovalve 29, which is operated hydraulically by the valve 28, moves from the position 29b to the position 29a and, if the valve 27 is in the rest position 27b, the two chambers 31 and 33 of the actuator cylinder 12 are put into communication with each other so as operatively to disconnect the stabiliser bar 9 from the body 6.

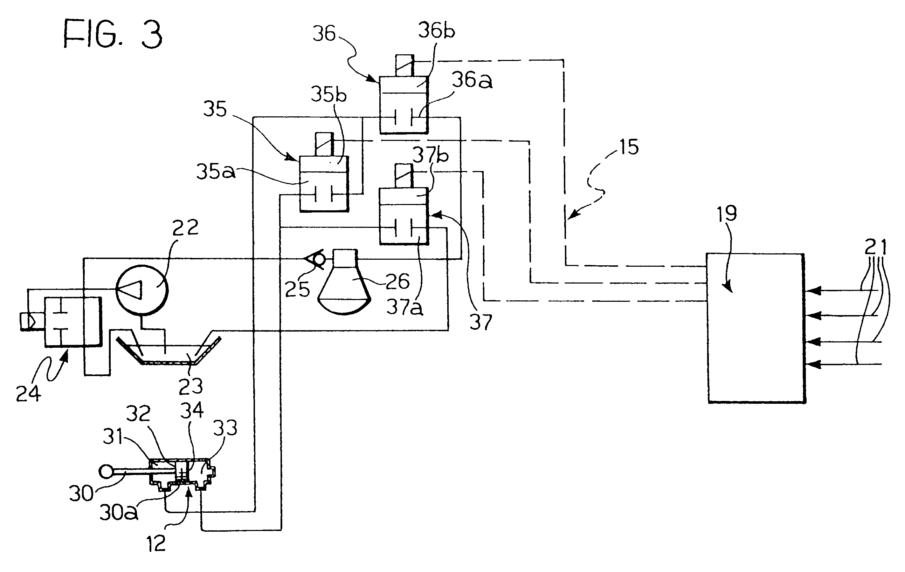

With reference to Figure 3, the hydraulic circuit diagram includes three identical two-way, two-position solenoid plug valves 35, 36 and 37. These are known valves of the on-off type which make the hydraulic circuit structurally simpler than that used in the embodiment of figure 2.

In this embodiment, the opposite ends 32 and 34 of the piston 30a of the actuator cylinder 12 are formed with a predetermined structural geometry; the end 34 has twice the surface area of the end 32 since the cross-sectional area of the rod 30 is half the surface area of the piston 30a and hence the area of the end 34 is 2S and that of the base 32 is S.

In operation, the signals 21 input to the electronic control unit 19 may, for example, generate a pulse to energise the valves 35 and 36 so as to move them to their positions 35b and 36b, whilst the valve 37 remains stationary in the position 37a shown in Figure 3. In this case, the fluid in the circuit, which is at a pressure p generated by the pump 22, will flow towards the two chambers 31 and 33 of the actuator 12, moving the piston 30a towards the chamber 31 as a result of the geometry of the opposite surfaces 32 and 34 of the piston 30a. In fact, since the surface 34 has an area of 2S, it will generate a force of 2pS towards the chamber 31, whilst the surface 32 whose area is S will generate a force of pS towards the chamber 33. The difference between the two forces, which is pS, will cause the piston 30a to move towards the chamber 31.

If the valve 36 remains in the position 36b and the valve 35 is moved to the position 35a shown in the drawing, the opening of the valve 37 and hence its movement to the position 37b will establish communication between the chamber 33 of the cylinder 12 and the discharge reservoir 23, whilst the chamber 31 will be subject to the pressure p of the fluid in the circuit; in this case, the piston 30a and its rod 30 will move towards the chamber 33 since they are subject to a force of pS.

When the valves 35, 36 and 37 are in the closed condition corresponding to the positions 35a, 36a and 37a shown in Figure 3, the actuator cylinder 12 constitutes a rigid unit and the stabiliser bar 9 thus acts as a conventional bar; in order to disconnect the stabiliser bar 9 from the suspension arm 5, it suffices, for example, to leave the valve 36 in the position 36a and open the valves 35 and 37 by moving them to their positions 35b and 37b, thus putting the chambers 31 and 33 of the actuator cylinder 12 into communication with the discharge reservoir 23.

In this embodiment, the pressure sensors 13 detect only the pressure in the chamber 31 of the actuator 12 which is always pressurised during the actuation stage and suffices to define the force exerted by the actuator 12.

## Claims

1. A system for controlling the load on a pair of antiroll stabiliser bars respectively associated with a front and a rear suspension units of the independent type for a motor vehicle, comprising:
- a pair of stabiliser bars (9) which are resiliently deformable under torsion and are carried by the motor-vehicle body (6) with their axis transverse the length of the vehicle, each bar (9) having end arms (9a, 9b) connected to respective elements (5) of the suspension units (2, 3) which are movable with the wheels (4) of the vehicle,
- a respective fluid actuator cylinder (12) interposed in the connection between at least one of the two end arms (9a, 9b) of each stabiliser bar (9) and the respective element (5) of the suspension (2, 3), each cylinder (12) including a body, a piston (30a) slidable in the body and defining two working chambers (31, 33) of the cylinder (12), and a rod (30) connected to the piston (30a),
- a circuit (15) for controlling the actuator cylinders (12), including a source (22) of pressurised fluid, a discharge reservoir (23), valve means (27, 28, 29, 35, 36, 37) for putting the two chambers (31, 33) of each actuator cylinder (12) into communication with the source (22) of pressurised fluid and with the discharge reservoir (23), and means for operating the valve means (27, 28, 29, 35, 36, 37),
- sensor means comprising at least an attitude sensor (8) for sensing at least one operating parameter of the suspensions (2, 3), and auxiliary sensors (17, 18) for sensing the speed and the steering angle of the vehicle,
- electronic control means (19) which receive the signals emitted by the sensor means and, in dependence on the signals, control the operating means which form part of the circuit (15) for controlling the actuator cylinders (12) so as to maintain a predetermined roll attitude of the vehicle,
characterised in that said at least one attitude sensor is a single attitude transducer (8) associated only with the rear suspension (3), measuring the mean height attitude of the rear suspension (3), whereby said control means (19) are able to calculate the roll centre of the body and to deduct the roll attitude of the body by means of the information coming only from said attitude sensor (8) and from said auxiliary sensors (17, 18).

2. A system according to claim 1, characterised in that each suspension unit (2, 3) has a single, respective double-acting actuator (12) interposed between one of the two end arms (9a, 9b) of each stabiliser bar (9) and the respective suspension element.

3. A system according to claim 1 or 2, characterised in that the electronic control means (19) are arranged to act on the operating means so as to maintain an attitude substantially corresponding to zero roll.

4. A system according to any one of claims 1 to 3, characterised in that the sensor means further include auxiliary sensors (16a, 16b) for sensing the transverse acceleration of the vehicle, and in that the electronic control means (19) are arranged to receive the signals emitted by the auxiliary sensors (16a, 16b, 17, 18) and to act on the operating means in dependence on the signals to control the yaw of the motor vehicle on bends.

5. A system according to claim 1, characterised in that the valve means include a proportional solenoid valve (27), and in that the operating means (28, 29) include two plug valves.

6. A system according to claim 1, characterised in that a pressure transducer (13) is associated with each cylinder (12) for measuring the pressure difference between the two working chambers (31, 33) of the actuator (12).

7. A system according to claim 1, characterised in that the valve means and the operating means comprise three identical plug valves (35, 36, 37).

8. A system according to claim 7, characterised in that the cross-sectional area of a first chamber (33) of the two working chambers (31, 33) of each cylinder (12) is twice that of the second chamber (31), and in that a pressure transducer (13) is associated with the second chamber (31) for detecting its pressure.

9. A system according to claim 1, characterised in that the source (22) of pressurised fluid is connected to a pressurised-fluid accumulator (26) which can be put into communication with the two chambers (31, 33) of the actuator cylinder (12).

## Patentansprüche

1. System zur Regelung der Belastung eines Paares von Rollstabilisatorstäben, die den vorderen und hinteren, unabhängigen Aufhängeeinheiten eines Motorfahrzeuges zugeordnet sind, mit
- einem Paar von Stabilisatorstäben (9), die unter Drehung elastisch verformbar und vom Fahrzeugaufbau (6) getragen sind, wobei ihre Achsen quer zur Längsrichtung des Fahrzeuges liegen, und wobei jeder Stab (9) Endarme (9a,9b) aufweist, die mit zugeordneten Elementen (5) der Aufhängeeinheiten (2,3) verbunden sind, die mit den Rädern des Fahrzeuges beweglich sind,
- einem Druckfluidstellzylinder (12) pro Stabilisatorstab (9), der in zumindest eine Verbindung der beiden Endarme (9a,9b) und den zugeordneten Elementen (5) der Aufhängungen (2,3) eingesetzt ist, wobei jeder Zylinder (12) einen Körper, einen im Körper gleitenden Kolben (30a), der zwei Arbeitsräume (31,33) des Zylinders (12) definiert, und eine mit den Kolben (30a) verbundene Stange (30) aufweist,
- einem Regelkreis (15) für die Stellzylinder (12), der eine Quelle (22) für ein unter Druck stehendes Fluid, einen Vorratsbehälter (23), Sperrorgane (27,28,29,35,36, 37), die die beiden Räume (31,33) jedes Stellzylinders mit der Druckquelle (22) des Fluids und mit dem Vorratsbehälter (23) verbinden, sowie Mittel zum Betätigen der Sperrorgane (27,28,29,35,36,37) aufweist,
- Sensormitteln, die zumindest einen Stellungssensor (8) für die Erfassung zumindest eines Betriebsparameters der Aufhängungen (2,3) und Hilfssensoren (17,18) für die Erfassung der Geschwindigkeit und des Lenkungswinkels des Kraftfahrzeuges aufweisen,
- elektronischen Steuermitteln (19), die die von den Sensormitteln abgegebenen Signale empfangen, und, in Abhängigkeit von den Signalen, die Betätigungsmittel, die Teil des Regelkreises (15) der Stellzylinder sind, so steuern, daß eine vorbestimmte Rollstellung des Kraftfahrzeuges beibehalten wird,
dadurch gekennzeichnet, daß zumindest ein Stellungssensor ein Umformer (8) für eine einzelne Stellung ist, der nur der hinteren Aufhängung (3) zugeordnet ist, um die mittlere Höhenlage der hinteren Aufhängung (3) zu messen, wobei die genannten Steuermittel (19) in der Lage sind, das Rollzentrum des Wagenaufbaus zu berechnen und die Rollstellung des Wagenaufbaus mittels der Information abzuleiten, die nur von dem genannten Stellungssensor (8) und den genannten Hilfssensoren (17,18) kommt.

2. System nach Anspruch 1, dadurch gekennzeichnet, daß jede Aufhängeeinheit (2,3) ein einzelnes doppeltwirkendes Stellglied (12) hat, das zwischen einem der beiden Endarme (9a,9b) des Stabilisatorstabes (9) und dem zugeordneten Aufhängungselement angeordnet ist.

3. System nach Anspruch 1 oder Anspruch 2, dadurch gekennzeichnet, daß die elektronischen Steuermittel (19) so auf die Betätigungsmittel einwirkend angeordnet sind, daß eine Stellung beibehalten wird, die im wesentlichen einem Nullrollen entspricht.

4. System nach einem der Ansprüche 1 bis 3, dadurch gekennzeichnet, daß die Sensormittel weiters Hilfssensoren (16a,16b) für die Erfassung der Querbeschleunigung des Kraftfahrzeuges aufweisen, und daß die elektronischen Steuermittel (19) Signale der Hilfssensoren (16a,16b,17,18) empfangen und in Abhängigkeit von den Signalen auf die Betätigungsmittel einwirken können, um das Gieren des Motorfahrzeuges in Kurven zu steuern.

5. System nach Anspruch 1, dadurch gekennzeichnet, daß die Sperrorgane ein Proportionalmagnetventil (27) aufweisen, und daß die Betätigungsmittel (28,29) zwei Kükenventile aufweisen.

6. System nach Anspruch 1, dadurch gekennzeichnet, daß ein Druckumformer (13) jedem Zylinder (12) zugeordnet ist, um den Druckunterschied zwischen den beiden Arbeitsräumen (31,33) des Stellgliedes (12) zu messen.

7. System nach Anspruch 1, dadurch gekennzeichnet, daß die Sperrorgane und die Betätigungsmittel drei identische Kükenventile (35,36,37) aufweisen.

8. System nach Anspruch 7, dadurch gekennzeichnet, daß die Querschnittsfläche eines ersten Raumes (33) der beiden Arbeitsräume (31,33) jedes Zylinders (12) das Doppelte von jener des zweiten Raumes (31) ist, und daS ein Druckumformer (13) für die Ermittlung des Druckes dem zweiten Raum (31) zugeordnet ist.

9. System nach Anspruch 1, dadurch gekennzeichnet, daß die Quelle (22) für das unter Druck stehende Fluid mit einem Druckmittelsammler (26) verbunden ist, der mit den beiden Räumen (31,33) des Stellzylinders (12) verbindbar ist.

## Revendications

1. Système de réglage de la charge appliquée à une paire de barres stabilisatrices antiroulis associées respectivement aux ensembles de suspensions avant et arrière de type indépendant d'un véhicule à moteur, comprenant :
- une paire de barres stabilisatrices (9) qui sont élastiquement déformables par torsion et qui sont supportées par la carrosserie (6) du véhicule à moteur avec un axe transversal à la longueur du véhicule, chaque barre (9) ayant des bras (9a, 9b) d'extrémité raccordés à des éléments respectifs (5) des ensembles de suspensions (2, 3) qui sont mobiles avec les roues (4) du véhicule,
- un vérin respectif (12) à fluide placé dans la connexion formée entre l'un au moins des deux bras d'extrémité (9a, 9b) de chaque barre stabilisatrice (9), et l'élément respectif (5) de la suspension (2, 3), chaque vérin (12) ayant un corps, un piston (30a) qui peut coulisser dans le corps et qui délimite deux chambres de travail (31, 33) du vérin (12), et une tige (30) raccordée au piston (30a),
- un circuit (15) de commande des vérins (12), comprenant une source (22) de fluide sous pression, un réservoir (23) d'évacuation, un dispositif à soupapes (27, 28, 29, 35, 36, 37) destiné à placer les deux chambres (31, 33) de chaque vérin (12) en communication avec la source (22) de fluide sous pression et avec le réservoir (23) d'évacuation, et un dispositif de commande du dispositif a soupapes (27, 28, 29, 35, 36, 37),
- un dispositif capteur qui comprend au moins un capteur d'attitude (8) destiné à détecter au moins un paramètre de fonctionnement des suspensions (2, 3), et des capteurs auxiliaires (17, 18) destinés à détecter la vitesse et l'angle de direction du véhicule,
- un dispositif électronique de commande (19) qui reçoit des signaux émis par le dispositif capteur et, en fonction des signaux, qui commande le dispositif de commande qui fait partie du circuit (15) de commande des vérins (12) afin qu'une attitude prédéterminée en roulis du véhicule soit conservée,
caractérisé en ce que ledit au moins un capteur d'attitude est un simple transducteur d'attitude (8) associé uniquement à la suspension arrière (3) mesurant l'attitude moyenne en hauteur de la suspension arrière (3), si bien que ledit dispositif de commande (19) peut calculer le centre de roulis de la carrosserie et déduire l'attitude en roulis de la carrosserie à l'aide des informations provenant uniquement du capteur d'attitude (8) et desdits capteurs auxiliaires (17, 18).

2. Système selon la revendication 1, caractérisé en ce que chaque ensemble de suspension (2,3) possède un seul vérin respectif à double effet (12) placé entre l'un des deux bras d'extrémité (9a, 9b) de chaque barre stabilisatrice (9) et l'élément respectif de suspension.

3. Système selon la revendication 1 ou 2, caractérisé en ce que le dispositif électronique de commande (19) est destiné à agir sur le dispositif de commande afin qu'une attitude correspondant pratiquement à un roulis nul soit conservée.

4. Système selon l'une quelconque des revendications 1 à 3, caractérisé en ce que le dispositif capteur comporte on outre des capteurs auxiliaires (16a, 16b) destinés à détecter l'accélération transversale du véhicule, et en ce que le dispositif électronique de commande (19) est destiné à recevoir les signaux émis par les capteurs auxiliaires (16a, 16b, 17, 18) et à agir sur le dispositif de commande d'après les signaux de commande de lacet du véhicule à moteur dans les virages.

5. Système selon la revendication 1, caractérisé en ce que le dispositif à soupapes comporte une électrovanne proportionnelle (27), et le dispositif de commande (28, 29) comprend deux robinet-vannes.

6. Système selon la revendication 1, caractérisé en ce qu'un transducteur de pression (13) est associé à chaque vérin (12) pour la mesure de la différence de pression entre les deux chambres de travail (31, 33) du vérin (12).

7. Système selon la revendication 1, caractérisé en ce que le dispositif à soupapes et le dispositif de commande comportent trois robinet-vannes identiques (35, 36, 37).

8. Système selon la revendication 7, caractérisé en ce que la surface de la section transversale d'une première chambre (33) des deux chambres de travail (31, 33) de chaque vérin (12) est égale au double de celle de la seconde chambre (31), et en ce qu'un transducteur de pression (13) est associé à la seconde chambre (31) pour la détection de sa pression.

9. Système selon la revendication 1, caractérisé en ce que la source (22) de fluide sous pression est raccordée à un accumulateur (26) de fluide sous pression qui peut être mis en communication avec les deux chambres (31, 33) du vérin (12).
